# EUROPÄISCHE PATENTSCHRIFT

(11) **EP 0 815 530 B1**
(45) Veröffentlichungstag und Bekanntmachung des Hinweises auf die Patenterteilung: **13.01.1999**
(21) Anmeldenummer: 96907280.0
(22) Anmeldetag: 20.03.1996
(51) Int. Cl.: G06K 7/10, G06K 19/07

(54) **VERFAHREN UND VORRICHTUNG ZUM ANPASSEN EINER CHIPKARTE AN UNTERSCHIEDLICHE KARTENENDGERÄTE**
METHOD AND DEVICE FOR ADAPTING A CHIP CARD TO DIFFERENT CARD TERMINALS
PROCEDE ET DISPOSITIF PERMETTANT D'ADAPTER UNE CARTE A PUCE A DIFFERENTS TERMINAUX DE CARTES

(30) Priorität: 20.03.1995 DE 19509517
(43) Veröffentlichungstag der Anmeldung: 07.01.1998
(73) Patentinhaber: Angewandte Digital Elektronik GmbH, 21521 Dassendorf (DE)
(72) Erfinder: KREFT, Hans-Diedrich, D-21521 Dassendorf (DE); JENNING, Michael, D-21035 Hamburg (DE); BADE, Ingo, D-23843 Bad Oldesloe (DE); WESENBERG, Jürgen, D-21149 Hamburg (DE)
(74) Vertreter: Mierswa, Klaus, Dipl.-Ing.
(86) Internationale Anmeldenummer: DE9600527
(87) Internationale Veröffentlichungsnummer: WO9629673

(56) Entgegenhaltungen:
- EP-A- 0 159 539
- EP-A- 0 552 828
- EP-A- 0 617 369
- EP-A- 0 642 096
- DE-C- 4 327 334
- DE-U- 9 208 724
- GB-A- 2 237 479

## Beschreibung

### Technisches Gebiet:

Die Erfindung betrifft ein Verfahren zum Anpassen von Chipkarten an unterschiedliche Kartenendgeräte, die mit den Chipkarten mittels elektromagnetischer Wellen Energie und Daten austauschen und die Chipkarten eine elektronische Schaltung, kontaktlose Anschlußmittel, wie Spulen, Kondensatoren, photosensitive Schichten oder Schwingkreise enthalten, die elektrisch miteinander verbunden sind sowie eine Vorrichtung nach den Oberbegriffen der Ansprüche 1 und 5.

### Stand der Technik:

Heute verwendete Karten können die zu ihrem Betrieb notwendige Energie aus dem sie umgebenden elektromagnetischen Feld in der Nähe eines Endgerätes gewinnen. Sie können auch unabhängig von dem umgebenden elektromagnetischen Feld arbeiten, indem die Karte aus einer eingebetteten elektrischen Energiequelle, wie Batterie oder Kondensator, oder aus einem tragbaren Gerät gespeist wird, in welches die Karte eingeschoben wird. Solche Karten werden für vielfache Anwendungen eingesetzt, wie zum Beispiel Telefonkarten, Gesundheitskarten oder Zutrittskontrollkarten. Ein Überblick über solche Karten und deren Anwendungen ist in drei Ausgaben der Elektronik Jahrgang 93 zusammengestellt.

Aus der DE 39 35 364 C1 ist eine Chipkarte bekannt geworden, welche Kontakte und kontaktfreie Übertragungselemente enthält. Aus der DE 4327334 C1 ist eine zwei Übertragerspulen oder Kondensatorplatten aufweisende kontaktlose Chipkarte bekannt geworden, die selbstätig erkennt, ob sie im Nahbereich eines Terminals arbeitet, wozu ein "Stereo-Effekt" ausgenützt wird. Mit diesem Effekt ist es möglich, bestimmte Daten auf der Karte einerseits nur dann zu ändern, wenn die Karte in einem Schreib/Lesegerät steckt, andererseits diesen Zugriff zu verbieten, wenn die Karte von fern angesprochen wird.

Bei Verfahren, die auf die Auswertung von übertragenen logischen Informationen, wie Befehlen, Protokollen, Codierungen, setzen und die Programme in Karten von außen per eingespeister Informationen starten, können umfangreiche Informationen in die Karte eingespeist werden, bevor sich die Karte sperren kann. Das Einbringen von unerwünschten Programmen oder -fragmente, wie Programmviren, in Chipkarten mit dem Zweck, die Karten zu Funktionen zum Beispiel wie Geldüberweisungen auf anonyme Konten zu veranlassen, wird zukünftig besonders bei kontaktfrei arbeitenden Chipkarten eine Gefahr darstellen. Solche Verfahren sind nicht sicher genug gegen unerwünschte Datenübertragungen zwischen Karte und Endgerät. Die bekannten Chipkarten sind gegen äußere Manipulationen noch nicht sicher genug.

Durch die GB-A-2 237 479 ist eine kontaktlose IC-Karte bekannt geworden, welche einen Mikroprozessor, Speicher, sowie eine Antenne zur bidirektionalen Datenübertragung aufweist. Die Chipkarte ist imstande, die pysikalischen Eigenschaften von empfangenen elektromagnetischen Wellen anhand der Amplituden auszuwerten, wobei die Amplitude der Wellen von Kartenendgerät zu Kartenendgerät unterschiedlich ist. In Abhängigkeit dieser Auswertung werden unterschiedliche Funktionsteile mit speziellen Funktionen aktiviert, wobei allerdings die Kartenfunktion dabei in allen Fällen gleich bleibt.

Durch die EPA-0159539 ist ein Chipkartensystem bekannt geworden, welches zur Verwendung als Geldersatz, als Ausweis bzw. Speichermedium dient, bei dem eine einzige Chipkarte nacheinander für unterschiedliche Anwendungsfälle benutzbar ist. Für die unterschiedlichen Anwendungsfälle sind unterschiedliche Bereich eines in den Chip integrierten Speichers oder einer Funktionseinheit vorgesehen. Für die Auswahl der unterschiedlichen Bereiche im Chip ist eine Auswahlschaltung im Chip vorhanden, für die eine bestimmte Auswahlprozedur festgelegt ist, durch welche sichergestellt werden kann, daß die für den betreffenden Anwendungsfall relevanten Bereiche und nur diese zugeordnet werden. Das erfolgt anhand der von einer Eingabe/Ausgabeeinrichtung übermittelten Informationen, die auf eine Trägerwelle aufmoduliert sind. Durch die unterschiedliche übertragene Information können somit unterschiedliche Kartenfunktionen für unterschiedliche Anwendungsfälle aktiviert werden.

### Technische Aufgabe:

Der Erfindung liegt die Aufgabe zugrunde, ein Verfahren und eine Vorrichtung anzugeben, daß ein-und-dieselbe Chipkarte mit unterschiedlichen Kartenendgeräten mit hoher Sicherheit gegen äußere Manipulationen zusammenarbeiten und dabei völlig unterschiedliche Funktionen ausführen kann.

### Offenbarung der Erfindung und deren Vorteile:

Die Lösung der Aufgabe erfolgt mit den Merckmalen der unabhängigen Ansprüche 1 und 5. Die von unterschiedlichen Kartenendgeräten gesendeten elektro-magnetischen Wellen unterscheiden sich in einem oder mehreren physikalischen Eigenschaften, wie Frequenz, Phase, Energiedichte, Amplitude etc., und die Chipkarte erkennt die empfangenen elektromagnetischen Wellen von den unterschiedlichen Kartenendgeräten an Hand dieser unterschiedlichen physikalischen Eigenschaften und aktiviert unterschiedliche Kartenfunktionen der Chipkarte in Abhängigkeit des jeweils erkannten Kartenendgerätes.

In vorteilhafter Weise erfolgt somit die Aktivierung einer von mehreren Funktionen der Chipkarte nicht durch die Auswertung von auf die Trägerwelle auf- oder einmodulierten Informationen, sondern aufgrund unterschiedlicher physikalischer Eigenschaften der elektromagnetischen Wellen unterschiedlicher Kartenendgeräte selbst. Dadurch besitzen derartige Karten ein hohes Maß an Sicherheit gegen von außen vorgenommene Manipulationen, weil zur Erkennung der Funktion, die die Karte ausüben soll, keine übertragenen logischen Informationen, wie Befehle, Protokolle oder Codierungen, die manipuliert werden könnten, notwendig sind.

Eine Vorrichtung, bestehend aus Cipkarten und Kartenendgeräten, die mit den Chipkarten mittels elektromagnetischer Wellen Energie und Daten auszutauschen imstande sind, wobei die Chipkarten eine elektronische Schaltung, kontaktlose Anschlußmittel, wie Spulen, Kondensatoren, photosensitive Schichten oder Schwingkreise sowie wahlweise einen elektrischen Energiespeicher, wie Akkumulator oder Batterie, enthalten, die elektrisch miteinander verbunden sind, ist dadurch gekennzeichnet, daß zum Anpassen von ein-und-derselben Chipkarte an unterschiedliche Kartenendgeräte die von denselben gesendeten elektromagnetischen Wellen sich in einem oder mehreren physikalischen Eigenschaften, wie Frequenz, Phase, Energiedichte, Amplitude etc., unterscheiden, wobei die elektronische Schaltung der Chipkarte einen Schaltungsteil aufweist, der die empfangenen elektromagnetischen Wellen nach ihren unterschiedlichen physikalischen Eigenschaften erkennt und in Abhängigkeit des jeweils erkannten Kartenendgerätes unterschiedliche Kartenfunktionen der Chipkarte aktiviert. Die Energieaufnahme und der Datenaustausch der Chipkarte erfolgt dabei entsprechend der speziellen Funktion des jeweils aktivierten Funktionsteiles.

Beispielsweise sind Chipkarten, die elektronische Chips enthalten, die gemäß vorgegebenen internationalen Normen (gemäß ISO-Standard 10536) kontaktfreie Funktionen erfüllen, sowie Karten im Umlauf, deren elektronische Chips diese Normen nicht erfüllen, dafür aber Nutzungsvorteile, wie größere kontaktfreie Reichweite, haben. Werden die beiden Chips dieser normgemäßen und nicht normgemäßen Karten auf einer Karte kombiniert, und wird eine solche Karte in die Nähe unterschiedlicher, dafür angepaßter Endgeräte gebracht, kann die Karte selbsttätig erkennen, welches Endgerät und damit welcher Fall vorliegt und ob und wie sie in dem elektromagnetischen Einflußbereich des betreffenden Endgerätes aktiv werden soll.

Zum Beispiel kann die normgemäße Karte geldwerte Einheiten oder personenbezogene Daten von einem Endgerät übernehmen und speichern, während diese Aktivitäten für eine nichtnormgemäße Karte bei demselben Endgerät ausgeschlossen sind. Es kann wünschenswert sein, die Abgabe von Informationen über weite Entfernungen beim Betreten eines Busses oder zum Öffnen einer Schranke ohne Vorliegen eines internationalen Standards zu ermöglichen. Das selbsttätige Erkennen des vorliegenden Falles und die Auswahl des geeigneten Verfahrens zum Daten- und/oder Energieaustausch zwischen Endgerät und Karte geschieht durch elektronische Schaltungen auf einer Karte durch die Auswertung von physikalischen Eigenschaften der elektromagnetischen Wellen, welche im Umfeld der Karte auftreten. Die Wahl des Verfahrens geschieht also nicht durch Auswertung von Informationen, welche im Endgerät in die elektromagnetischen Schwingungen durch Frequenz- oder Amplitudenmodulation, Phasenschiebung oder dergleichen per logischer Schaltungen oder Programme eingebracht wurden. In diesen Fällen ist eine umfangreiche Wechselwirkung zwischen Karte und Endgerät bereits erforderlich, bevor sich die Karte sperren kann.

Von einem Endegerät können auch gleichzeitig mehrere unterschiedliche oder gleiche elektromagnetische Wellen ausgesandt und von der Chipkarte gleichzeitig getrennt empfangen und ausgewertet werden und umgekehrt. Eine Chipkarte kann dadurch entscheiden, ob sie sich im Nahbereich oder im Fernbereich des elektromagnetischen Feldes eines Endgerätes befindet.

Kurzbeschreibung der Zeichnung, in der zeigen:
- Figur 1: schematisch die Kontaktflächen einer Chipkarte, die über elektrisch leitende Verbindungen mit einer elektronischen Schaltung verbunden ist
- Figur 2: eine Chipkarte mit Anschlußmitteln in einem von einem Endgerät ausgesandten elektromagnetischen Feld
- Figur 3: einzelne Empfangs- und Sendeelemente wie Spulen, Kondensatoren, photosensitive Schichten und/oder Schwingkreise, die in dem Anschlußelement in unterschiedlichen Kombinationen enthalten sein können und
- Figur 4: ein Endgerät und eine Chipkarte mit jeweils zwei gleichartigen Anschlußmitteln im Abstand A auf Seiten des Endgerätes und der Chipkarte.

### Bevorzugte Ausführungsform der Erfindung:

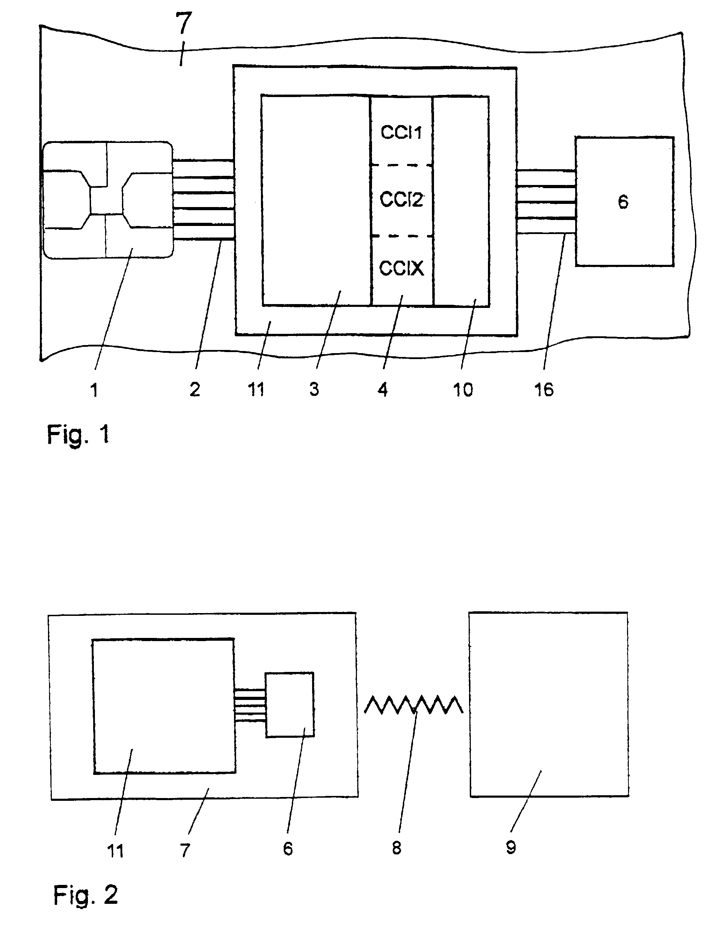

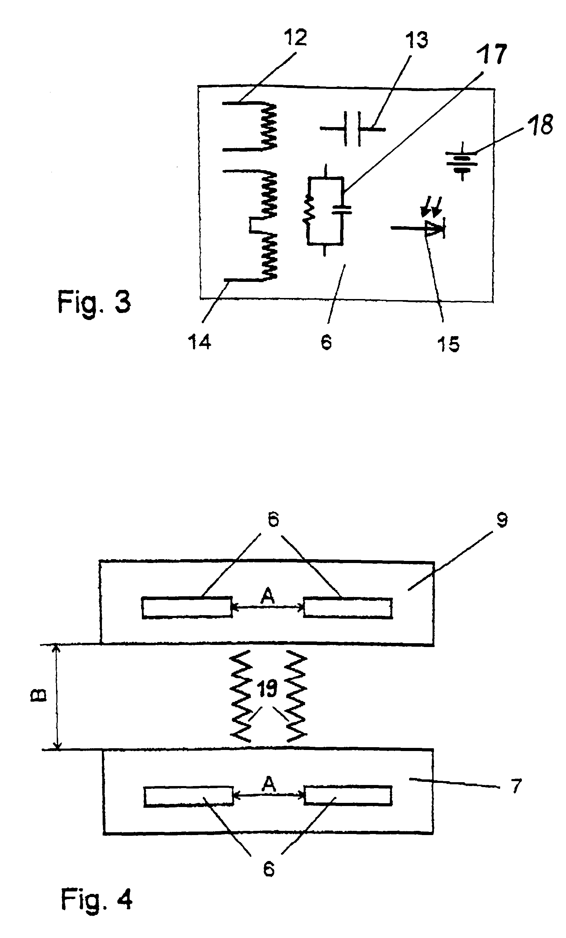

Figur 1 zeigt schematisch Kontaktflächen 1 einer Chipkarte 7, welche über elektrisch leitende Verbindungen 2 mit einer elektronischen Schaltung 11 verbunden ist. Die Schaltung 11 ist über elektrisch leitende Verbindungen 16 mit Anschlußmitteln 6 zum kontaktlosen Empfang elektromagnetischer Wellen 8 verbunden, die in Figur 2 symbolisch dargestellt sind. Die Schaltung 11 enthält die Schaltungsteile Mikrokontroller 3 und einen elektronischen Schaltungsteil 4, der seinerseits mehrere elektronische Funktionsteile CCl1, CCl2 bis CClX enthält, wobei CClX für die Möglichkeit des Einsatzes weiterer solcher Funktionsteile steht. Die Schaltung 11 umfaßt einen weiteren elektronischen Schaltungsteil 10, der einerseits mit den Funktionsteilen CCl1, CCl2 bis CClX und andererseits unmittelbar über die Verbindungen 16 mit den Anschlußmitteln 6 verbunden sein kann. Figur 2 zeigt die Chipkarte 7 mit den Anschlußmitteln 6, welche sich im elektro-magnetischen Feld der von einem Endgerät 9 ausgesandten elektromagnetischen Welle 8 befindet. Die Figur 3 zeigt einzelne Empfangs- und Sendeelemente auf der Chipkarte 7, wie Spulen 12, 14, Kapazitäten/Kondensatoren 13, photosensitive Schichten 15, Schwingkreise 17, sowie elektrische Energiespeicher 18, wie Akkumulatoren oder Batterien, wobei sämtliche Elemente im Anschlußelement 6 in unterschiedlichen Kombinationen enthalten sein können.

Die von einem spezifischen Endgerät 9 ausgesandten elektromagnetischen Wellen 8 werden in den Anschlußmitteln 6 der Chipkarte 7 empfangen und innerhalb des Schaltungsteils 10 der Schaltung 11 nach einem oder mehreren physikalischen Merkmalen der Welle 8, wie Frequenz, Phase, Energiedichte, Amplitude, Zerhackungszustand etc. ausgewertet. Gemäß dem Ergebnis der Auswertung wird eines oder auch mehrere der elektronischen Funktionsteile CCl1, CCl2 bis CClX aktiviert; die Energieaufnahme und der Datenaustausch der Chipkarte 7 mit dem Endgerät 9 erfolgen nun entsprechend der speziellen Funktion des jeweils aktivierten Funktionsteiles CCl1, CCl2 bis CClX.

Die von einem anderen Endgerät für ein-und-dieselbe Chipkarte 7 ausgesandten elektromagnetischen Wellen unterscheiden sich von derjenigen des Endgerätes 9 in einem oder mehreren physikalischen Merkmalen, wobei diese unterschiedlichen Wellen des anderen Endgerätes innerhalb des Schaltungsteils 10 der Chipkarte 7 detektiert und dem nunmehr zu aktivierenden Funktionsteil CCl1 oder CCl2 oder bis CClX zugeordnet werden und nun eine entsprechend andere Funktion des aktivierten Funktionsteiles CCl1 oder CCl2 oder bis CClX erfolgt.

In der Figur 4 sind die Verhältnisse zwischen Endgerät 9 und Karte 7 für den Fall gezeigt, daß zwei gleichartige Anschlußmittel 6 im Abstand A auf Seiten des Endgerätes 9 als auch auf Seiten der Karte 7 vorliegen. Karte 7 und Endgerät 9 haben eine Distanz B zueinander. Über die Distanz B werden gleichzeitig zwei getrennte, elektromagnetische Wellen 19 übertragen, die gleich oder unterschiedlich sein können und die getrennt, aber gleichzeitig von der Chipkarte 7 empfangen werden. Auf diese Weise können elektronische Bauelemente der Chipkarte 7 aufgrund des in der DE 4327334 C1 beschriebenen "Stereo-Effekt" den Abstand B zwischen Karte und Endgerät erkennen und feststellen, ob sich die Karte im Nahbereich oder im Fernbereich eines Endgerätes 9 befindet.

Um eine bidirektionale Datenübertragung zu ermöglichen, können die Bauteile für den Datenempfang der Chipkarte in analoger Weise auch im Kartenendgerät vorgesehen sein, um analog von der Chipkarte ausgesandte elektromagnetische Wellen sowie Daten von der Chipkarte zu empfangen.

### Gewerbliche Anwendbarkeit:

Der Gegenstand der Erfindung ist insbesondere für Chipkarten gewerblich anwendbar, um Chipkarten einerseits für mehrere unterschiedliche Kartenendgeräte anzupassen und andererseits die Chipkarten von außen manipulationssicher zu machen. Die Nützlichkeit der Erfindung besteht insbesondere darin, daß zur Erkennung der Funktion, die die Karte ausüben soll, keine übertragenen logischen Informationen, wie Befehle, Protokolle oder Codierungen, die manipuliert werden könnten, notwendig sind. Das Einbringen von unerwünschten Programmen oder -fragmenten, wie Programmviren, mit dem Zweck, die Karte zum Beispiel zu Funktionen wie Geldüberweisungen auf ein anonymes Konto zu veranlassen, ist mit dem erfindungsgemäßen Verfahren und der erfindungsgemäßen Chipkarte erheblich erschwert bzw. praktisch unmöglich gemacht.

## Patentansprüche

1. Verfahren zum Anpassen von Chipkarten (7) an Kartenendgeräte (9), die mit den Chipkarten (7) mittels elektromagnetischer Wellen (8,19) Energie und Daten austauschen und die Chipkarten (7) eine elektronische Schaltung (11), kontaktlose Anschlußmittel (6), enthalten, die elektrisch miteinander verbunden sind, wobei die von unterschiedlichen Kartenendgeräten (9) gesendeten elektro-magnetischen Wellen (8,19) sich in einer oder mehreren physikalischen Eigenschaften unterscheiden, und daß die Chipkarte (7) die empfangenen elektromagnetischen Wellen (8,19) von den unterschiedlichen Kartenendgeräten (9) an Hand dieser unterschiedlichen physikalischen Eigenschaften erkennt dadurch gekennzeichnet, daß die Chipkarte unterschiedliche Kartenfunktionen der Chipkarte (7) in Abhängigkeit des jeweils erkannten Kartenendgerätes (9) aktiviert.

2. Verfahren nach Anspruch 1, dadurch gekennzeichnet,
dass zur Erzielung von unterschiedlichen Kartenfunktionen der Chipkarte (7) gemäß dem Erkennungsergebnis unterschiedliche Funktionsteile (CCl1,CCl2,CClX) der elektronischen Schaltung (11) der Chipkarte (7) aktiviert werden, wobei die Energieaufnahme und der Datenaustausch der Chipkarte (7) entsprechend der speziellen Funktion des jeweils aktivierten Funktionsteils (CCl1, CCl2, CClX) erfolgt.

3. Verfahren nach Anspruch 1 oder 2, dadurch gekennzeichnet,
daß von einem Kartenendgerät (9) gleichzeitig unterschiedliche elektromagnetischen Wellen (8,19) ausgesandt und von der Chipkarte (7) gleichzeitig empfangen und ausgewertet werden.

4. Verfahren nach Anspruch 1, dadurch gekennzeichnet,
dass zur Durchführung desselben ein auf der Chipkarte (7) befindlicher, elektrischer Energiespeicher (18) verwendet wird.

5. Vorrichtung bestehend aus Chipkarten (7) und Kartenendgeräten (9), die mit den Chipkarten (7) mittels elektromagnetischer Wellen (8,19) Energie und Daten auszutauschen imstande sind und die Chipkarten (7) eine elektronische Schaltung (11), kontaktlose Anschlußmittel (6) enthalten, die elektrisch miteinander verbunden sind,
wobei zum Anpassen von ein-und-derselben Chipkarte (7) an unterschiedliche Kartenendgeräte (9) die von denselben gesendeten elektromagnetischen Wellen (8,19) sich in einem oder mehreren physikalischen Eigenschaften unterscheiden, die elektronische Schaltung (11) der Chipkarte einen Schaltungsteil (10) aufweist, der die empfangenen elektromagnetischen Wellen (8,19) nach ihren unterschiedlichen physikalischen Eigenschaften erkennt dadurch gekennzeichnet, daß der Schaltungsteil (10) so ausgebildet ist, daß er in Abhängigkeit des jeweils erkannten Kartenendgerätes (9) unterschiedliche Kartenfunktionen der Chipkarte (7) aktiviert.

6. Vorrichtung nach Anspruch 5, dadurch gekennzeichnet,
dass zur Erzielung von unterschiedlichen Kartenfunktionen der Chipkarte (7) gemäß dem Erkennungsergebnis unterschiedliche Funktionsteile (CCl1, CCl2,CClX) der elektronischen Schaltung (11) der Chipkarte (7) aktivierbar sind, und die Energieaufnahme und der Datenaustausch der Chipkarte (7) entsprechend der speziellen Funktion des jeweils aktivierten Funktionsteils (CCl1, CCl2, CClX) erfolgt.

7. Vorrichtung nach Anspruch 5, dadurch gekennzeichnet,
daß für eine bidirektionale Datenübertragung die Bauteile (3,4,6,10,11) der Chipkarte (7) in analoger Weise auch im Kartenendgerät (9) vorgesehen sind, um analog von der Chipkarte (7) ausgesandte elektromagnetische Wellen (8,19) zu empfangen.

8. Vorrichtung nach Anspruch 5 oder 6, dadurch gekennzeichnet,
daß sowohl im jeweiligen Kartenendgerät (9) als auch auf der Chipkarte (7) zwei gleichartige Anschlußmittel (6) im vorgegebenen Abstand (A) vorhanden sind und das Kartenendgerät (9) und/oder die Chipkarte (7) über eine Distanz (B) gleichzeitig zwei getrennte, elektromagnetische Wellen (8,19) zu übertragen und die Chipkarte (7) und/oder das Endgerät (9) gleichzeitig die beiden elektromagnetischen Wellen (8,19) zu empfangen imstande ist.

9. Vorrichtung nach Anspruch 5, dadurch gekennzeichnet,
dass die Chipkarten einen elektrischen Energiespeicher (18) enthalten.

## Claims

1. Process for adapting chip cards (7) to card terminals (9) which exchange energy and data with the chip cards (7) by means of electromagnetic waves (8, 19), and the chip cards (7) contain an electronic circuit (11) and contactless connection means (6), which are electrically connected to each other, whereby the electromagnetic waves (8, 19) transmitted by different card terminals (9) differ in one or more physical properties, and whereby the chip card (7) recognizes the electromagnetic waves (8, 19) received from the different card terminals (9) on the basis of these different physical properties,
characterized in that
the chip card activates different card functions of the chip card (7), depending on the card terminal (9) recognized in each case.

2. Process according to Claim 1, characterized in that
in order to achieve different card functions of the chip card (7), based on the recogni-tion results, different functional parts (CCl1, CCl2, CClX) of the electronic circuit (11) of the chip card (7) are activated, whereby the energy consumption and the data exchange of the chip card (7) take place according to the special function of the func-tional part (CCl1, CCl2, CClX) activated in each case.

3. Process according to Claim 1 or 2, characterized in that
different electromagnetic waves (8, 19) are transmitted by a card terminal (9) at the same time and they are received and evaluated by the chip card (7) at the same time.

4. Process according to Claim 1, characterized in that
an electrical energy storage element (18) located on the chip card (7) is used to carry out said process.

5. Device consisting of chip cards (7) and card terminals (9) which are capable of exchanging energy and data by means of electromagnetic waves (8, 19) and the chip cards (7) contain an electronic circuit (11), contactless connection means (6), which are electrically connected to each other, whereby, in order to adapt one and the same chip card (7) to different card terminals (9), the electromagnetic waves (8, 19) trans-mitted by said card terminals (9) differ in one or more physical properties, whereby the electronic circuit (11) of the chip card has a circuit component (10) which recognizes the received electromagnetic waves (8, 19) by their different physical properties,
characterized in that
the circuit component (10) is configured in such a way that it activates different functions of the chip card (7), depending on the specific recognized card terminal (9).

6. Device according to Claim 5, characterized in that
in order to achieve different card functions of the chip card (7), based on the result of the recognition, different functional parts (CCl1, CCl2, CClX) of the electronic circuit (11) of the chip card (7) can be activated, and the energy consumption and the data exchange of the chip card (7) take place according to the special function of the func-tional part (CCl1, CCl2, CClX) activated in each case.

7. Device according to Claim 5, characterized in that
for bi-directional data transmission, in an analogous manner, the components (3, 4, 6, 10, 11) of the chip card (7) are also present in the card terminal (9) in order to analogously receive electromagnetic waves (8, 19) transmitted by the chip card (7).

8. Device according to Claim 5 or 6, characterized in that
both in the particular card terminal (9) as well as on the chip card (7), there are two similar connection means (6) at the prescribed distance (A) and the card terminal (9) and/or the chip card (7) is capable of transmitting two separate electromagnetic waves (8, 19) at the same time over a distance (B), and the chip card (7) and/or the terminal (9) is capable of receiving both electromagnetic waves (8, 19) at the same time.

9. Device according to Claim 5, characterized in that
the chip cards contain an electrical energy storage element (18).

## Revendications

1. Procédé permettant d'adapter des cartes à puce (7) à des terminaux de cartes (9) qui, à l'aide d'ondes électromagnétiques (8,19), échangent de l'énergie et des données avec les cartes à puces qui comprennent un circuit électronique (11) et des moyens de connexion sans contact (6) reliés électriquement entre eux, les ondes électromagnétiques (8,19) émises par différents terminaux (9) se distinguant par une ou plusieurs propriétés physiques, procédé dans lequel la carte à puce (7) reconnaît les ondes électromagnétiques (8,19) reçues des terminaux différents (9) à l'aide de ces propriétés physiques différentes,
caractérisé en ce que
la carte à puce active différentes fonctions de la carte à puce (7) en fonction du terminal de cartes (9) identifié.

2. Procédé selon la revendication 1, caractérisé en ce que,
pour obtenir différentes fonctions de la carte à puce (7), différentes parties fonctionnelles (CCl1, CCl2, CClX) du circuit électronique (11) de la carte à puce (7) sont activées en fonction du résultat de l'identification, l'absorption d'énergie et l'échange de données de la carte à puce (7) s'effectuant conformément à la fonction spécifique de la partie fonctionnelle (CCl1, CCl2, CClX) activée.

3. Procédé selon l'une quelconque des revendications 1 ou 2, caractérisé en ce que
différentes ondes électromagnétiques (8, 19) sont émises simultanément par le même terminal de cartes (9) et reçues et évaluées simultanément par la carte à puce (7).

4. Procédé selon la revendication 1, caractérisé en ce que,
pour la mise en oeuvre dudit procédé, l'on utilise un accumulateur d'énergie électrique (18) disposé sur la carte à puce (7).

5. Dispositif comprenant des cartes à puces (7) et des terminaux (9) qui sont en mesure d'échanger avec les cartes à puces (7), au moyen d'ondes électromagnétiques (8,19), de l'énergie et des données, les cartes à puces (7) comprenant un circuit électronique (11) et des moyens de connexion sans contact (6) reliés électriquement entre eux, dispositif dans lequel, aux fins de l'adaptation de la même carte à puce (7) à différents terminaux (9) de cartes, les ondes électromagnétiques (8, 19) émises par ces derniers se distinguent par une ou plusieurs propriétés physiques, le circuit électronique (11) de la carte à puce présentant une partie de circuit (10) qui identifie les ondes électromagnétiques (8,19) en fonction de leurs différentes propriétés physiques, caractérisé en ce que
la partie de circuit (10) est conformée de sorte qu'elle active les différentes fonctions de la carte à puce (7) en fonction du terminal (9) respectivement identifié.

6. Dispositif selon la revendication 5, caractérisé en ce que,
pour obtenir diverses fonctions de la carte à puce (7), différentes parties fonctionnelles (CCl1, CCl2, CClX) du circuit électronique (11) de la carte à puce (7) peuvent être activées en fonction du résultat d'identification et que l'absorption d'énérgie et l'échange de données de la carte à puce (7) s'effectuent conformément à la fonction spécifique de la partie fonctionnelle activée (CCl1, CCl2, CClX).

7. Dispositif selon la revendication 5, caractérisé en ce que,
pour assurer une transmission bidirectionnelle des données, les éléments (3,4, 6,10,11) de la carte à puce (7) sont prévus de façon analogue également dans le terminal (9), afin de recevoir les ondes électromagnétiques (8,19) émises de manière analogue par la carte à puce (7).

8. Dispositif selon l'une quelconque des revendications 5 ou 6, caractérisé en ce que,
aussi bien le terminal de cartes (9) que la carte à puce (7) possèdent deux moyens de connexion de même type (6) disposés à un écart défini (A), que le terminal (9) et/ou la carte à puce (7) sont en mesure de transmettre simultanément, sur une même distance (B), deux ondes électromagnétiques (8,19) séparées, et que la carte à puce (7) et/ou le terminal (9) sont en mesure de recevoir simultanément les deux ondes électromagnétiques (8,19).

9. Dispositif selon la revendication 5, caractérisé en ce que
les cartes à puces (7) sont dotées d'un accumulateur d'énergie électrique (18).
